# EUROPÄISCHE PATENTSCHRIFT

(11) **EP 2 776 637 B1**
(45) Veröffentlichungstag und Bekanntmachung des Hinweises auf die Patenterteilung: **03.02.2016**
(21) Anmeldenummer: 12786940.2
(22) Anmeldetag: 07.11.2012
(51) Int. Cl.: E02D 27/42

(54) **FUNDAMENT EINER WINDENERGIEANLAGE**
FOUNDATION FOR A WIND MOTOR
FONDATION D' UNE ÉOLIÈNNE

(30) Priorität: 08.11.2011 DE 102011085947
(43) Veröffentlichungstag der Anmeldung: 17.09.2014
(73) Patentinhaber: Wobben Properties GmbH, 26607 Aurich (DE)
(72) Erfinder: COORDES, Thomas, 26632 Ihlow (DE)
(74) Vertreter: Eisenführ Speiser
(86) Internationale Anmeldenummer: PCT/EP2012/072035
(87) Internationale Veröffentlichungsnummer: WO 2013/068403

(56) Entgegenhaltungen:
- EP-A2- 1 849 920
- DE-B3-102005 044 989

## Beschreibung

Die vorliegende Erfindung betrifft eine Turmfußsektion zum Errichten einer Windenergieanlage darauf. Weiterhin betrifft die vorliegende Erfindung eine Turmfußanordnung mit einer Turmfußsektion. Die vorliegende Erfindung betrifft auch einen Turm einer Windenergieanlage sowie ein Verfahren zum Errichten eines Turms einer Windenergieanlage.

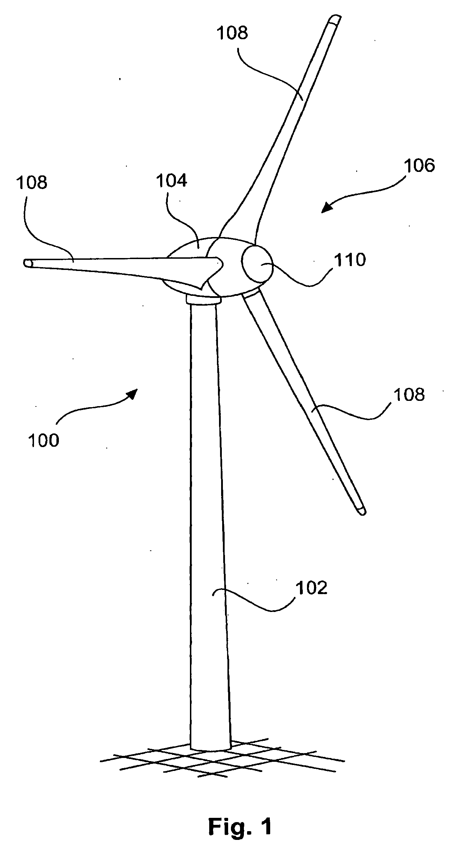

Windenergieanlagen sind allgemein bekannt und werden häufig auf einem Turm errichtet, wie dies auch bei der in Fig. 1 gezeigten Windenergieanlage der Fall ist. Ein solcher Turm einer Windenergieanlage, nämlich ein Windenergieanlagenturm, wird dazu auf einem geeigneten Fundament errichtet. Hierbei ist auch für eine senkrechte Ausrichtung bzw. Nivellierung des Turms zu sorgen.

Es ist bekannt, zur Vorbereitung der Errichtung eines Windenergieanlagenturms eine Turmfußsektion zum Teil in dem Fundament mit einzubetonieren, um darauf den weiteren Turm zu errichten. Eine solche Turmfußsektion ist als Zylindermantel oder Kegelstumpfmantel mit einem oberen umlaufenden Ringflansch ausgebildet und wird so einbetoniert, dass dieser obere Ringflansch außerhalb des Betonfundamentes bleibt, um darauf den Turm, insbesondere einen Stahlturm, zu errichten. Dabei kann diese Turmfußsektion von einer Haltevorrichtung in ausgerichteter bzw. ausnivellierter Position gehalten werden, während das Betonfundament gegossen wird. Sobald der Beton ausgehärtet ist, kann eine solche Turmfußsektion von der Haltevorrichtung gelöst werden. Ein solches Verfahren ist aber insbesondere für kleinere Türme vorgesehen und macht gegebenenfalls eine spätere Nachnivellierung auf seinem oberen Ringflansch erforderlich. Ungünstig hierbei ist auch, dass diese Turmfußsektion beim Gießen und Aushärten des Betons von der Haltevorrichtung gehalten werden muss. Auch kann diese Art der Turmfußsektion für die Errichtung und damit Verankerung sehr großer Windenergieanlagentürme problematisch sein.

Eine andere Methode ist, einen Fundamentkorb mit einem unteren, kreisförmigen Segmentanker und einer Vielzahl senkrechter, kreisförmig angeordneter Verbindungsstangen einzubetonieren, wobei die Verbindungsstangen von dem unten liegenden Segmentanker, mit dem sie verbunden sind, durch den Beton und an der Oberfläche des Betons nach oben herausragt und dort die Oberfläche des Betons bzw. Fundamentes einen kreisförmigen Befestigungsbereich bildet und dabei mit einem umlaufenden Nivellierring versehen sind. Dieser Nivellierring kann nach dem Aushärten des Betons angeordnet und ausnivelliert werden, um darauf ein erstes Turmsegment ausgerichtet anzuordnen und zu befestigen. Hierbei ragen die Verbindungsstangen mit Gewindeabschnitten durch entsprechende Bohrungen eines unteren Flansches des unteren Turmsegmentes und können dort zur Befestigung mit Muttern versehen werden.

Problematisch hierbei ist, dass beim Gießen des Betons die Verbindungsstangen im Bereich der herzustellenden Betonoberfläche bzw. Fundamentoberfläche mit einer Schablone ausgerichtet werden müssen, damit sie nach dem Aushärten des Betons korrekt angeordnet sind und sich problemlos durch die vielen Bohrungen des anzuordnenden Nivellierrings und des Flansches des anzuordnenden unteren Turmsegmentes erstrecken können. Ein solches Verfahren ist somit aufwändig, weil zunächst eine solche Schablone anzuordnen ist und nach dem Aushärten des Betons gegen den Nivellierring getauscht werden muss. Hierfür ist die Mutter jeder Verbindungsstange zu lösen, um die Schablone entfernen zu können, und dann wieder nach Aufsetzen des Nivellierrings und des unteren Turmsegmentes anzubringen. Eine Anordnung mit einem Nivellierring ist der deutschen Patentanmeldung DE 10 2004 017 006 A1 zu entnehmen. Das Dokument EP 1 849 920 A2 zeigt einen Turmadapter, der auf einem Fundament mit einbetonierten Verankerungsbolzen aufgesetzt und befestigt wird.

Problematisch bei dieser Verwendung eines Fundamentkorbes mit unterem Segmentanker und Nivellierung ist zudem, dass bei falschem oder unpräzisem Aufbau des Fundamentkorbes schief stehende Verbindungsstangen, die auch als Bolzen bezeichnet werden können, resultieren können. Das kann problematisch bei der weiteren Verbindung des Nivellierrings und das aufzusetzenden ersten Turmsegmentes sein. Eine Ursache kann in einer fehlerhaften Verwendung einer oberen Schablone zum Ausrichten der Bolzen liegen.

Der vorliegenden Erfindung liegt somit die Aufgabe zugrunde, zumindest eines der oben genannten Probleme zu adressieren. Insbesondere soll eine Lösung zum Verbessern einer Turmfußgründung eines Windenergieanlagenturms vorgeschlagen werden. Zusätzlich oder alternativ soll Aufbau und Anordnung eines Fundamentkorbes vereinfacht und/oder weniger fehleranfällig werden. Zumindest soll eine alternative Lösung vorgeschlagen werden.

Erfindungsgemäß wird eine Turmfußsektion nach Anspruch 1 vorgeschlagen. Eine solche Turmfußsektion ist vorbereitet zum Anordnen und Befestigen auf einem Fundament und zum Errichten eines Turms einer Windenergieanlage darauf. Die Turmfußsektion umfasst einen äußeren, unteren Ringflansch zum Aufsetzen auf dem Fundament und zum Befestigen an dem Fundament. Weiterhin ist ein innerer, oberer Ringflansch zum Aufsetzen und Befestigen eines Turmsegmentes mit korrespondierendem unterem Turmflansch darauf vorgesehen. Insbesondere entspricht dieser innere, obere Ringflansch (worauf nachfolgend vereinfachend auch als oberer Ringflansch Bezug genommen wird) im Wesentlichen einem korrespondierenden unteren Turmflansch in Größe und Art und Anzahl von Bohrungen zum Durchführen von Befestigungsbolzen.

Die Turmfußsektion weist zudem einen inneren, unteren Stützflansch zum Aufsetzen auf dem Fundament auf, wobei auch dieser innere, untere Stützflansch als Ringflansch ausgebildet ist und insbesondere zur besseren Übersichtlichkeit als Stützflansch bezeichnet wird. Insbesondere ist der äußere, untere Ringflansch und der innere, untere Stützflansch benachbart zueinander angeordnet und weisen eine gemeinsame, kreisringförmige Oberfläche auf, die auf dem Fundament bzw. auf einer Nivellierschicht auf dem Fundament anzuordnen und aufzusetzen sind. Dabei ist unter dem Aufsetzen auf dem Fundament zu verstehen, dass die Turmfußsektion insbesondere im fertig angeordneten Zustand auf dem Fundament sitzt. Das Aufsetzen auf dem Fundament ist nicht so eng zu verstehen, dass erst ein Anordnen und Aufsetzen der Turmfußsektion nach vollständiger Erstellung des Fundaments auf demselben erfolgt. Vielmehr wird später im Detail beschrieben, wie die Turmfußsektion vorzugsweise auf dem Fundament ihre Position erhält.

Weiterhin sind innere Stützelemente, insbesondere Stützstreben zum Abstützen des oberen Ringflansches gegen den unteren Stützflansch vorgesehen. Diese Stützelemente sind somit zwischen dem oberen Ringflansch und dem unteren Stützflansch angeordnet und dazu vorbereitet, eine Kraft, die auf den oberen Ringflansch wirkt, insbesondere durch den darauf lastenden Turm, zumindest teilweise auf den unteren Stützflansch und damit im Ergebnis auf das Fundament zu übertragen. Außerdem bzw. alternativ sind diese Stützelemente dazu vorgesehen und geeignet, eine Verspannkraft durch entsprechende Befestigungselemente aufzunehmen, die zwischen dem inneren oberen Ringflansch und dem unteren Stützflansch wirken können, wenn diese direkt oder indirekt gegeneinander verspannt werden.

Gemäß einer Ausführungsform ist die Turmfußsektion gekennzeichnet durch einen ringförmigen Mantelabschnitt, der den unteren Ringflansch und den unteren Stützflansch mit dem oberen Ringflansch verbindet. Insbesondere definiert der Mantelabschnitt einen äußeren Bereich und einen inneren Bereich. Der äußere und der innere Bereich entsprechen im Grunde einem äußeren bzw. inneren Turmbereich des zu errichtenden Windenergieanlagenturms. Der untere äußere Ringflansch ist dabei im äußeren Bereich angeordnet und somit auch von außerhalb des zu errichtenden Turms sichtbar und zugänglich. Hingegen sind der obere Ringflansch, der untere Stützflansch und die Stützelemente im inneren Bereich, also nach Errichtung eines Windenergieanlagenturms im Inneren des Turms angeordnet. Vorzugsweise weist die Höhe des Mantelabschnitts 0,2 m bis 2 m auf, vorzugsweise 0,5 m bis 1,5 m und besonders bevorzugt 0,75 m. Dadurch ergibt sich entsprechend ein Abstand des oberen Ringflansches zum unteren Stützflansch in jeweils dieser Größe. Bei Anordnung der Turmfußsektion auf dem Fundament ist somit der innere obere Ringflansch in etwa dieser Höhe, also im Bereich von 0,2 m bis 2 m bzw. 0,5 m bis 1,5 m bzw. 0,75 m angeordnet. Hierdurch ist auch dieser innere obere Ringflansch in einer entsprechend angenehmen und praktikablen Arbeitshöhe für einen Mitarbeiter eines Aufbauteams, der auf dem Fundament steht.

Eine weitere Ausgestaltung sieht eine Turmfußsektion vor, die dadurch gekennzeichnet ist, dass die Stützelemente als vertikale Stützrippen ausgestaltet sind und insbesondere der obere Ringflansch und der untere Stützflansch mehrere Bohrungen zum Durchführen von Befestigungsschrauben oder Befestigungsbolzen aufweisen und jede Stützrippe jeweils am oberen Ringflansch zwischen zwei der Bohrungen und am unteren Stützflansch zwischen ebenfalls zwischen zwei Bohrungen, die nämlich zu den jeweils oberen beiden Bohrungen korrespondieren, befestigt ist. Bei bestimmungsgemäß durchgeführten Befestigungsschrauben bzw. Befestigungsbolzen jeweils durch eine Bohrung des unteren Stützflansches und des oberen Ringflansches ist somit jeweils wenigstens eine Befestigungsschraube bzw. ein Befestigungsbolzen zwischen zwei Stützrippen angeordnet. Werden nun die Befestigungsschrauben bzw. Befestigungsbolzen angezogen und üben eine Zugkraft aus, die auch zu einer Zugkraft zwischen dem unteren Stützflansch und oberen Ringflansch führt, so können die Stützrippen dieser Kraft entgegenwirken und entsprechend einer Verformung der beiden Flansche entgegenwirken.

Gemäß einer Ausgestaltung sind zwischen einigen Stützrippen keine Bohrungen, insbesondere können mehr Stützrippen als entsprechende Bohrungen vorhanden sein.

Erfindungsgemäß wird zudem eine Turmfußanordnung vorgeschlagen, die eine Turmfußsektion, insbesondere eine wie oben beschriebene erfindungsgemäße Turmfußsektion beinhaltet. Weiterhin beinhaltet die Turmfußanordnung einen Fundamentkorb mit inneren und äußeren Befestigungsbolzen zum Verankern mit jeweils einer Seite in einem Fundament und zum Befestigen mit jeweils einer anderen Seite an der Turmfußsektion. Die inneren Befestigungsbolzen sind dabei etwa um die Höhe der Turmfußsektion länger als die äußeren Befestigungsbolzen. Zumindest sind die inneren Befestigungsbolzen hinsichtlich ihrer wirksamen Länge um die Höhe der Turmfußsektion länger als die äußeren Befestigungsbolzen. Demnach sollen insbesondere die Befestigungsbolzen im Fundament auf gleicher Höhe angeordnet und somit nach ausgehärtetem Beton befestigt sein, nämlich insbesondere an einem etwa horizontal angeordneten kreisförmig umlaufenden Segmentanker. Dabei reichen die äußeren Befestigungsbolzen von dem Segmentanker zum und durch den äußeren unteren Ringflansch. Die inneren Befestigungsbolzen reichen von dem Segmentanker zu und durch den inneren unteren Stützflansch und weiter zu und durch den inneren oberen Ringflansch. Nach Anordnung eines unteren Turmsegmentes auf der Turmfußsektion mit einem unteren Turmflansch ragen die inneren Befestigungsbolzen zudem noch durch diesen unteren Turmflansch des unteren Turmsegments. Die wirksame Länge der Verbindungsbolzen ist diejenige, die nötig ist, um eine Verbindung zwischen Segmentanker und äußerem unteren Ringflansch bzw. zwischen Segmentanker und innerem oberen Ringflansch herzustellen. Bei sehr genauer Betrachtung kommt im letzteren Fall, also für die inneren Verbindungsbolzen, noch die Dicke des unteren Turmflansches des aufzusetzenden unteren Turmsegmentes hinzu.

Gemäß einer Ausführungsform der Turmfußanordnung werden somit die äußeren Befestigungsbolzen zum Befestigen mit der Turmfußsektion durch Bohrungen des äußeren unteren Ringflansches geführt und die inneren Befestigungsbolzen werden durch Bohrungen des inneren, unteren Stützflansches und durch Bohrungen des oberen, inneren Ringflansches geführt. Dabei sollen die inneren Befestigungsbolzen zur Befestigung eines mit einem unteren Turmflansch auf den inneren, oberen Ringflansch aufzusetzenden Turmsegmentes vorbereitet sein, um dabei nämlich durch Bohrungen des unteren Turmflansches geführt zu werden.

Eine weitere Ausgestaltung einer erfindungsgemäßen Turmfußanordnung sieht mehrere Verbindungsbolzen vor, zum Verbinden der Turmfußsektion mit einem unteren auf die Turmfußsektion aufgesetzten unteren Turmsegment. Die Verbindungsbolzen reichen hierbei durch den inneren, oberen Ringflansch und den korrespondierenden unteren Turmflansch des aufgesetzten Turmsegmentes. Die Verbindungsbolzen reichen insbesondere nicht in das Fundament hinein. Eine solche Turmfußanordnung weist somit äußere Befestigungsbolzen auf, die zum Verankern von dem äußeren, unteren Ringflansch in das Fundament hineinreichen. Weiterhin sind innere Befestigungsbolzen vorgesehen, die von dem unteren Turmflansch des aufgesetzten Turmsegments weiter durch den inneren, oberen Ringflansch reichen und von dort aus weiter durch den inneren, unteren Stützflansch in das Fundament hineinreichen. Zusätzlich zu diesen inneren und äußeren Befestigungsbolzen sind Verbindungsbolzen vorgesehen, die lediglich den inneren, oberen Ringflansch mit dem unteren Turmflansch verbinden und vorzugsweise auch entsprechend kurz ausgebildet sind. Diese Verbindungsbolzen reichen also im Grunde nur durch diese beiden aneinanderliegenden Flansche, nämlich den inneren, oberen Ringflansch und en unteren Turmflansch, hindurch und weisen entsprechend an beiden Enden noch ausreichend Platz zum Anordnen jeweils eines Spannmittels wie einer Spannmutter auf. Eine solche Spannmutter kann vereinfachend auch als Mutter bezeichnet werden.

Vorzugsweise wechseln sich Verbindungsbolzen und Befestigungsbolzen, die jeweils beide durch den inneren, oberen Ringflansch und den unteren Turmflansch reichen, ab. Der untere Turmflansch des untersten, aufgesetzten Turmsegmentes ist somit, bezogen auf eine Umlaufrichtung, abwechselnd einerseits mit einem inneren Befestigungsbolzen in dem Fundament verankert bzw. gegen dieses verspannt und andererseits mit einem Verbindungsbolzen nur an dem inneren, oberen Ringflansch befestigt bzw. gegen diesen verspannt. Mit anderen Worten wechseln sich im inneren der Turmfußanordnung lange innere Befestigungsbolzen und kurze Verbindungsbolzen ab.

Es können auch mehr innere Befestigungsbolzenz als Verbindungsbolzen oder umgekehrt vorgesehen sein. Außerdem oder alternativ können auch innere Befestigungsbolzen einerseits und Verbindungsbolzen andererseits paarweise angeordnet sein, so dass in Umfangsrichtung auf zwei inneren Befestigungsbolzen zwei Verbindungsbolzen folgen und darauf wieder zwei innere Befestigungsbolzen usw., um nur ein weiteres Beispiel anzugeben.

Auch für die Verwendung von Verbindungsbolzen, die also nicht durch den inneren, unteren Stützflansch reichen, kann eine Turmfußsektion verwendet werden, die auch für eine Turmfußanordnung ohne Verbindungsbolzen vorgesehen ist. Mit anderen Worten kann auch für diese Ausführungsform eine Turmfußanordnung, die Verbindungsbolzen verwendet, eine Turmfußsektion verwendet werden, die in ihrem inneren, oberen Ringflansch ebensoviele Bohrungen aufweist, wie in ihrem inneren, unteren Stützflansch. Es würden dann einige Bohrungen in dem inneren, unteren Stützflansch keinen durchreichenden Bolzen aufweisen und insoweit leer bleiben. Natürlich können solche insoweit leer bleibenden Bohrungen aber mit einer Füllmasse ausgefüllt sein, falls dies gewünscht ist.

Alternativ kann eine Turmfußsektion verwendet werden, die speziell für eine Turmfußanordnung ausgelegt und angepasst ist, die Verwendungsbolzen verwendet.

Eine Turmfußanordnung, die Verbindungsbolzen verwendet, kann dadurch eine Kräfteeinleitung vom Turm, insbesondere vom unteren Turmsegment, in das Fundament auf zwei Wegen erreichen. Die Krafteinleitung, also insbesondere Zugkräfte, können so einerseits von dem unteren Turmsegment unmittelbar über die inneren Befestigungsbolzen in das Fundament eingeleitet werden. Weiterhin können solche Kräfte teilweise über die Verbindungsbolzen in die Turmfußsektion eingeleitet und von dort aus weiter mittels der äußeren Befestigungsbolzen in das Fundament eingeleitet werden. Dabei ist eine solche Verankerung im Fundament mit vergleichsweise geringem Materialaufwand möglich, insbesondere was die Anzahl an Bolzen und Verspannmitteln, wie Verspannmuttern, betrifft. Eine vergleichsweise geringe Anzahl von Verspannmittel, wie Verspannmutter, kann zudem den Aufwand beim Errichten einer solchen Turmfußanordnung verringern.

Vorzugsweise weist eine Turmfußanordnung so viele äußere Befestigungsbolzen wie innere Befestigungsbolzen auf und/oder sie weist so viele äußere Befestigungsbolzen auf wie innere Befestigungsbolzen und Verbindungsbolzen zusammen.

Zudem wird ein Turm einer Windenergieanlage gemäß Anspruch 7 vorgeschlagen. Dieser weist ein Fundament mit einem Fundamentkorb mit äußeren und inneren Befestigungsbolzen und mit einer Turmfußsektion gemäß einer der oben beschriebenen erfindungsgemäßen Ausführungsformen auf. Weiterhin weist der Turm ein unteres Turmsegment, insbesondere ein Stahlturmsegment, mit einem unteren Turmflansch auf. Das untere Turmsegment ist dabei mit seinem Turmflansch auf der Turmfußsektion angeordnet. Einige der Befestigungsbolzen, insbesondere die inneren Befestigungsbolzen, sind vom Fundament durch den inneren, unteren Stützflansch und durch den inneren, oberen Ringflansch der Turmfußsektion und durch den unteren Turmflansch geführt, um dadurch den unteren Turmflansch auf der Turmfußsektion anzuordnen und an dem Fundament zu befestigen. Die Befestigung erfolgt insbesondere durch Aufschrauben und Festziehen von Befestigungsmuttern auf den durch den unteren Turmflansch nach oben hindurch ragenden Befestigungsbolzen.

Somit stellen die inneren Befestigungsbolzen eine unmittelbare Befestigung bzw. Verspannung des unteren Turmsegmentes mit dem Fundament, insbesondere einen in dem Fundament vorgesehenen Segmentanker her. Die Turmfußsektion ist dabei zwischen Fundament und Turmsegment angeordnet und die inneren Verbindungsbolzen reichen somit vollständig über die Turmfußsektion hinaus.

Erfindungsgemäß wird ein Verfahren zum Errichten eines Turms einer Windenergieanlage, insbesondere eines Stahlturms gemäß Anspruch 8 vorgeschlagen. Demnach erfolgt zunächst das Positionieren eines mit einer Turmfußsektion verbundenen Fundamentkorbs in einer für das Gießen eines Fundamentes vorbereiteten Fundamentgrube. Anschließend kann Beton in die Fundamentgrube zum teilweisen Einbetonieren des Fundamentkorbes gegossen werden. Das Gießen erfolgt dabei vorzugsweise möglichst so, dass sich eine Betonoberfläche, also eine Fundamentoberfläche, etwa kurz unterhalb der Turmfußsektion, nämlich kurz unterhalb unterer Flansche der Turmfußsektion ergibt. Vorzugsweise sollte gerade so viel Platz zwischen Betonoberfläche und Unterseite der Turmfußsektion verbleiben, dass noch eine Nivellierung durch eine Nivelliermasse bzw. Ausgleichsmasse vorgenommen werden kann.

Der Beton wird dann aushärten und nachdem der Beton ausgehärtet ist, kann der Aufbau des Turms fortgesetzt bzw. je nach Betrachtungsweise begonnen werden. Einer der nächsten Schritte des Aufbaus des Turms ist das Aufsetzen und Befestigen eines unteren Turmsegmentes. Je nach Größe des Turmes kann das untere Turmsegment auch das einzige Turmsegment sein, auf das dann eine Windenergieanlagengondel oder zumindest ein Azimutlager aufgesetzt wird.

Vorzugsweise wird bei dem Verfahren zum Errichten eines Turms einer Windenergieanlage eine erfindungsgemäße Turmfußsektion gemäß einer der beschriebenen Ausführungsformen verwendet. Vorzugsweise ist der Fundamentkorb beim Positionieren über Befestigungsbolzen mit der Turmfußsektion verbunden. Dabei werden innere Befestigungsbolzen durch Bohrungen des oberen, inneren Ringflansches geführt und dort mit Befestigungsmitteln befestigt, insbesondere mit entsprechenden Muttern.

Vorzugsweise wird die Turmfußsektion beim Gießen des Betons von einem Kran oder einem in der Fundamentgrube aufgestellten Tragrahmen gehalten, wodurch außerdem der an der Turmfußsektion befestigte Fundamentkorb gehalten wird. Der Fundamentkorb hängt hierbei im Grunde an der Turmfußsektion.

Vorzugsweise wird nach dem Aushärten des Betons die Turmfußsektion nivelliert. Die Turmfußsektion wird somit gerade ausgerichtet, um einen möglichst exakt senkrechten Aufbau des Turmes zu ermöglichen. Hierzu kann beispielsweise eine selbstnivellierende Masse auf dem Fundament unterhalb der beiden unteren Flansche der Turmfußsektion aufgetragen werden und die Turmfußsektion nach Aushärtung der selbstnivellierten Nivelliermasse darauf abgesetzt werden. Alternativ kann die Turmfußsektion als solche ausnivelliert werden und die ausnivellierte Position der Turmfußsektion durch eine entsprechende Ausgleichsmasse fixiert werden. Auch hierbei ist diese Ausgleichsmasse im Bereich zwischen Fundament und den unteren Flanschen der Turmfußsektion anzuordnen, um dort in der nivellierten Position auszuhärten. Gegebenenfalls kann je nach Betonfundament auf das Nivellieren verzichtet werden, oder ohne Ausgleichs- bzw. Nivelliermasse nivelliert werden. In diesem Fall steht die Turmfußsektion direkt auf dem Fundament. Die äußeren Befestigungsbolzen können dann fest verspannt werden, nämlich insbesondere mit entsprechend aufgesetzten Muttern. Bei den inneren Befestigungsbolzen können obere Muttern nun gelöst werden und eine untere Turmsektion mit einem unteren Turmflansch auf die Turmfußsektion aufgesetzt werden, wobei die inneren Befestigungsbolzen dabei durch Bohrungen des unteren Turmflansches durchgeführt werden und durch entsprechende Muttern dann festgezogen werden können.

Es wird somit erreicht, dass jedenfalls die äußeren Muttern, nämlich die Muttern der äußeren Befestigungsbolzen auch nach dem Gießen des Betons und nach dem Ausnivellieren nicht mehr gelöst, sondern nur noch festgezogen werden müssen. Das Austauschen einer Schablone kann somit vermieden werden. Die Turmfußsektion kann beim Ausgießen ohne Kran gehalten werden oder benötigt nur einen sehr kleinen Kran, so dass entsprechende Kosten für Kranzeiten reduziert werden können. Dabei wird eine Turmfußsektion zwischen Fundament und unterem Turmsegment angeordnet, die zusammen mit dem unteren Turmsegment jedenfalls im inneren Bereich an dem Fundament befestigt, insbesondere fest verspannt wird. Die vorgeschlagene Lösung vermeidet jedenfalls im inneren Bereich eine Befestigung der Turmfußsektion mit dem Fundament einerseits und eine Befestigung der unteren Turmsektion an der Turmfußsektion andererseits. Es können somit hier zwei Sätze Muttern und die entsprechende Arbeitszeit, diese anzuordnen und festzuschrauben, eingespart werden. Zumindest ist hier eine Aufwands- und Materialreduzierung erreichbar.

Insbesondere erfolgt das Aufsetzen und Befestigen eines unteren Turmsegmentes so, dass von den inneren Befestigungsbolzen die Befestigungsmittel, also insbesondere Muttern, entfernt werden, das untere Turmsegment mit einem unteren Turmflansch auf den inneren, oberen Ringflansch der Turmfußsektion aufgesetzt wird und dabei die inneren Befestigungsbolzen durch Bohrungen des unteren Turmflansches geführt werden. Dann werden die Befestigungsmittel, insbesondere Befestigungsmuttern, auf die durch den Turmflansch ragenden inneren Befestigungsbolzen aufgeschraubt, um den Turmflansch fest auf den oberen inneren Ringflansch der Turmfußsektion zu ziehen.

Nachfolgend wird die Erfindung beispielhaft anhand von Ausführungsbeispielen unter Bezugnahme auf die begleitenden Figuren näher erläutert.
- Fig. 1: zeigt eine Windenergieanlage in einer perspektivischen Ansicht.
- Fig. 2: zeigt eine Schnittansicht durch einen Teil einer erfindungsgemäßen Turmfußanordnung.
- Fig. 3: zeigt schematisch eine Turmfußsektion ohne Turm, ohne Fundament und ohne Fundamentkorb in einer perspektivischen Ansicht.
- Fig. 4: zeigt schematisch eine Turmfußsektion mit Fundamentkorb und mit einem Turmflansch in einer perspektivischen Ansicht.
- Fig. 5: zeigt schematisch eine Turmfußsektion mit Fundamentkorb und einer umlaufenden Ausgleichsschicht zum Nivellieren schematisch, wobei der Beton, auf dem die Ausgleichsschicht angeordnet ist, nicht dargestellt ist.
- Fig. 6: zeigt schematisch eine bestimmungsgemäß auf einem Fundament und einer Ausgleichsschicht angeordnete Turmfußsektion in einer perspektivischen Darstellung.
- Fig. 7: zeigt eine Schnittansicht durch einen Teil einer Turmfußanordnung gemäß einer weiteren Ausführungsform.

Nachfolgend werden unter Umständen für ähnliche, aber nicht identische Merkmale gleiche Bezugszeichen verwendet, um das Verständnis der Funktionalität der jeweiligen Elemente zu verbessern.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

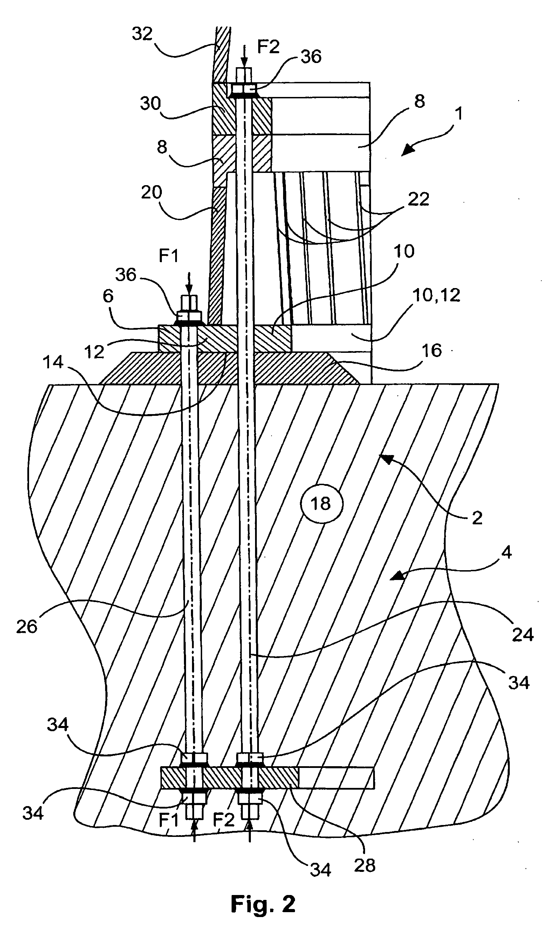

Die Turmfußanordnung 2 der Fig. 2 umfasst eine Turmfußsektion 1 und einen Fundamentkorb 4, der auch als Bolzenkorb bezeichnet werden kann.

Die Turmfußsektion 1 umfasst einen äußeren unteren Ringflansch 6, einen inneren oberen Ringflansch 8 und einen unteren inneren Stützflansch 10, der ebenfalls in Form eines Ringflansches ausgebildet ist. Der äußere untere Ringflansch 6 und der untere innere Stützflansch 10 bilden im Grunde zusammen einen unteren ringförmigen Fußabschnitt 12. Dieser untere ringförmige Fußabschnitt 12 kann aus einem Stück, insbesondere aus Stahl gefertigt sein und weist eine untere Standfläche 14 auf, mit der die Turmfußsektion 1 auf einer ringförmig angeordneten Ausgleichsschicht 16 steht, die wiederum auf einem Fundament 18 angeordnet ist.

Der untere ringförmige Fußabschnitt 12 ist über einen ringförmigen Mantelabschnitt 20 mit dem oberen inneren Ringflansch 8 verbunden. Der ringförmige Mantelabschnitt 20 ist fast in Form eines Zylindermantels ausgestaltet, unterscheidet sich davon aber durch eine konische Ausgestaltung und entspricht damit einem Kegelstumpfmantel. Der untere ringförmige Fußabschnitt 12, der ringförmige Mantelabschnitt 20 und der obere innere Ringflansch 8 sind in der Fig. 2 mit unterschiedlichen Schraffuren in der gezeigten Schnittansicht versehen. Dennoch sind diese drei Abschnitte 12, 20 und 8 fest miteinander verbunden, insbesondere miteinander verschweißt. Alle drei genannten Abschnitte 12, 20 und 8 können aus Stahl gefertigt sein und sie können als ein gemeinsames Gussteil ausgebildet sein.

Die Turmfußsektion 1 der Fig. 2 weist zudem Stützelemente 22 auf, von denen in der Fig. 2 fünf Stützelemente 22 gezeigt sind. Die Stützelemente 22 können auch als Stützstreben oder Verstärkungsbleche bezeichnet werden. Die Stützelemente 22 sind zwischen dem oberen inneren Ringflansch 8 und dem unteren inneren Stützflansch 10 angeordnet und mit beiden sowie mit dem ringförmigen Mantelabschnitt 20 fest verbunden, insbesondere verschweißt oder gemeinsam als ein Gussteil gefertigt. Kräfte, die auf den oberen inneren Ringflansch 8 wirken, können über diese Stützelemente 22 und auch den ringförmigen Mantelabschnitt 20 zum unteren ringförmigen Fußabschnitt abgeleitet werden. Insbesondere werden solche Kräfte von den Stützelementen 22 zum unteren inneren Stützflansch 10 abgeleitet und auch von dem ringförmigen Mantelabschnitt 20 zum unteren ringförmigen Fußabschnitt bzw. äußeren, unteren Ringflansch abgeleitet.

Der Fundamentkorb 4 umfasst eine Vielzahl innerer Bolzen 24 und äußerer Bolzen 26. Die inneren Bolzen 24 und die äußeren Bolzen 26 sind jeweils in einer ringförmigen Reihe in dem Fundament 18 angeordnet und an einer unteren Seite mit einem Segmentanker 28 befestigt, der in dem Fundament 18 entsprechend ebenfalls ringförmig in etwa einer horizontalen Ebene umläuft und auch als Ankerring bezeichnet werden kann. Auf dem oberen inneren Ringflansch 8 und damit auf der Turmfußsektion 1 ist ein unterer Turmflansch 30 angeordnet, der einen unteren Teil einer angedeuteten unteren Turmsektion 32 bildet.

Der Fundamentkorb 4 ist nun so ausgebildet, dass die inneren Bolzen 24 von dem Segmentanker 28 durch das Fundament 18 nach oben durch die Ausgleichsschicht 16, den inneren unteren Stützflansch 10, den oberen inneren Ringflansch 8 und schließlich durch den unteren Turmflansch 30 reichen. Diese inneren Bolzen 24, die als Gewindebolzen ausgebildet sind, sind mittels Muttern 34 an dem Segmentanker 28 befestigt. Mit weiteren Muttern 36, die mit den Muttern 34 identisch sein können, wird der untere Turmflansch 30 somit gegen den Segmentanker 28 verspannt. Dadurch wird auch ein Turm, von dem die untere Turmsektion 32 in Fig. 2 angedeutet ist, fest mit dem Segmentanker und damit dem Fundament verbunden.

Die äußeren Bolzen 26 sind ebenfalls mit Muttern 34 an dem Segmentanker 28 befestigt und ragen durch das Fundament 18 nach oben durch die Ausgleichsschicht 16 und durch den äußeren unteren Ringflansch 6, an dem sie mittels Muttern 36 befestigt sind.

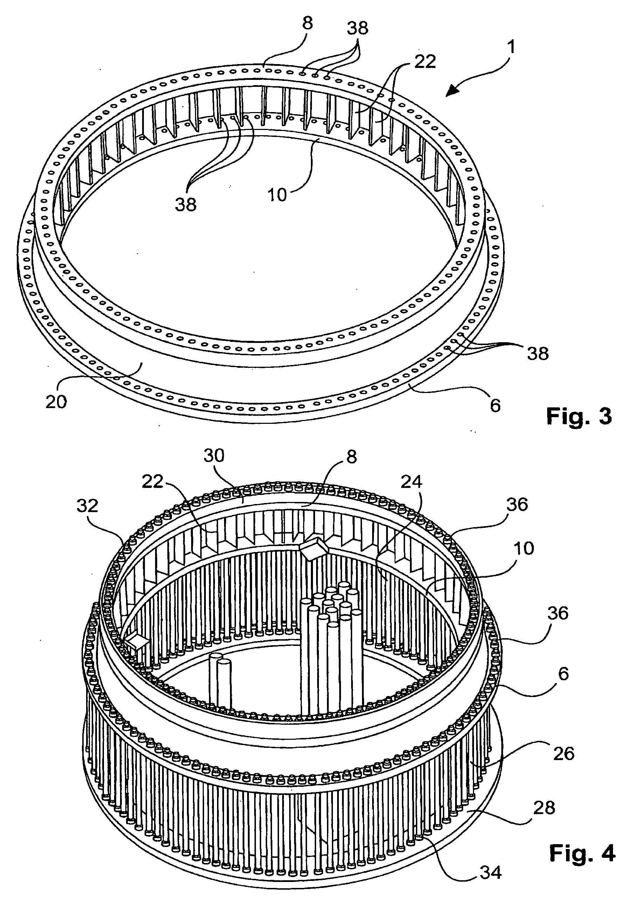

Fig. 3 zeigt perspektivisch und schematisch eine Turmfußsektion 1. Diese Turmfußsektion 1 entspricht im Wesentlichen der Turmfußsektion 1, die in der Fig. 2 in dem geschnitten Ausschnitt gezeigt ist. In der Fig. 3 ist zu erkennen, dass die Stützelemente 22 als Stützstreben bzw. Verstärkungsbleche ausgestaltet sind und jeweils im Bereich des unteren inneren Stützflansch 10 und des oberen, inneren Ringflansch 8 jeweils zwischen 2 Bohrungen 38 angeordnet sind. Dabei sind jeweils 2 Bohrungen 38 am unteren, inneren Stützflansch 10 bzw. oberen, inneren Ringflansch 8 zwischen 2 Stützelementen 22 angeordnet. Mit anderen Worten befindet sich nur nach jeder zweiten Bohrung 38 jeweils ein Stützelement 22. Die Turmfußsektion kann auch als ein Gussteil, insbesondere Stahlgussteil gefertigt sein.

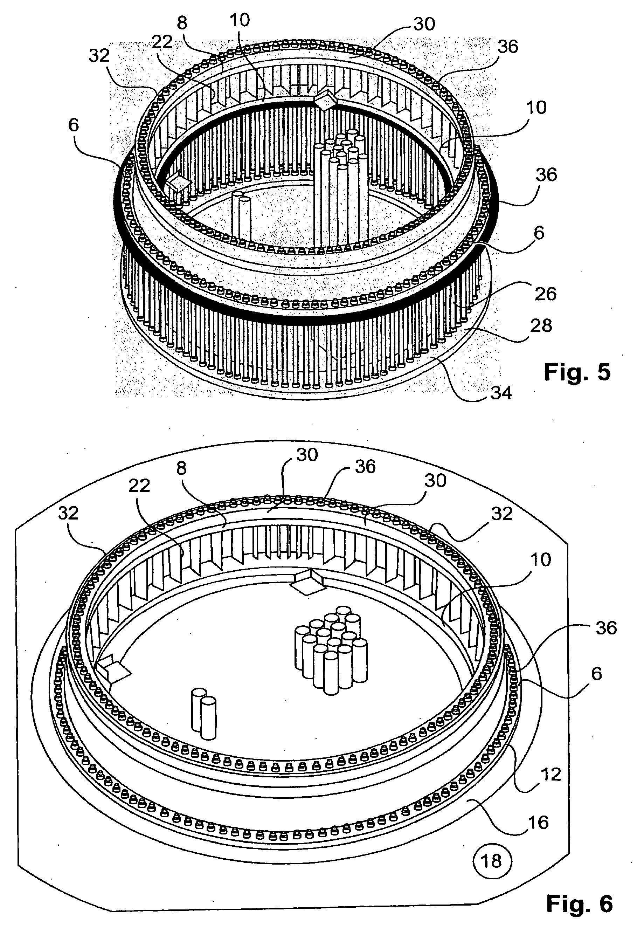

Die Fig. 4 bis 6 zeigen im Grunde dieselbe Turmfußanordnung 2 in einer perspektivischen Darstellung wobei diese gemäß Fig. 6 bestimmungsgemäß in einem Betonfundament 18 eingegossen ist und mit ihrem unteren, ringförmigen Fußabschnitt 12 dabei auf einer Ausgleichsschicht 16 ruht.

In Fig. 5 ist im Gegensatz zur Darstellung der Fig. 6 der Beton ausgeblendet. In Fig. 4 ist zu dem die Ausgleichsschicht 16 ausgeblendet.

Jede der Figuren 4 bis 6 zeigt zudem einen unteren Turmflansch 30 mit dem Ansatz einer unteren Turmsektion 32. Der größte Teil der Turmsektion 32 ist ausgeblendet, um die Details der Turmfußanordnung 2 besser erkennbar zu haben.

Durch die beschriebene Erfindung ist somit ein einfacherer und sicherer Aufbau der Fundamentkörbe erreichbar und Montagezeiten können verkürzt werden. Es ist eine Vormontage des Fundamentkorbs mit Stahlsegment ohne Schablonen erreichbar, so dass das Entfernen der Schablonen entfallen kann. Durch einen einfacheren und sicheren und insbesondere dadurch auch besser reproduzierbaren Aufbau des Fundamentkorbes können Schäden am Fundament und damit Sanierungsarbeiten am Fundament vermieden werden.

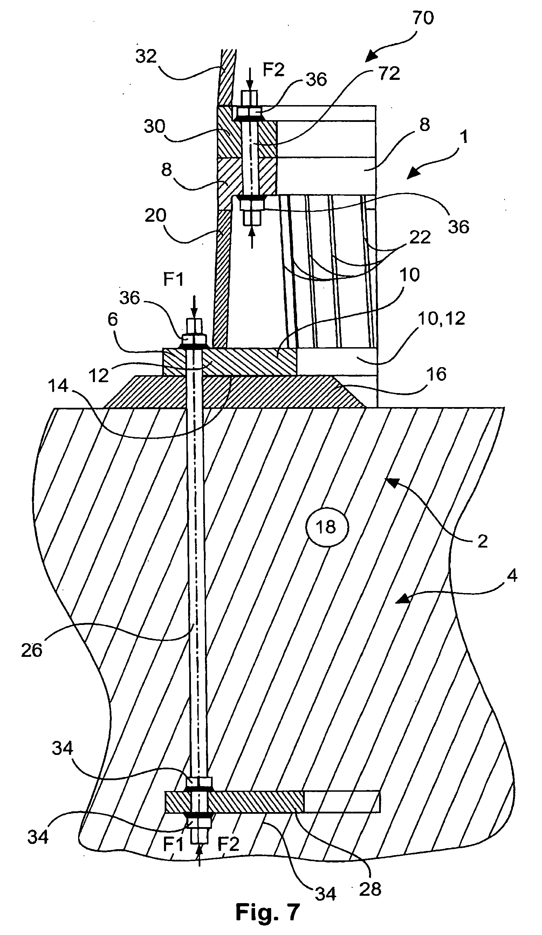

Die Figur 7 zeigt einen Schnitt durch eine Turmfußanordnung 70 gemäß einer weiteren Ausführungsform. Diese Schnittansicht der Figur 7 entspricht im Wesentlichen der Schnittansicht der Figur 2. Auch die gezeigten Elemente sind ganz ähnlich oder sogar identisch und insoweit werden hier gleiche Bezugszeichen für ähnliche oder sogar identische Elemente verwendet, obwohl die Fußanordnung 70 als solche sich von der Fußanordnung 2 der Figur 2 wie folgt unterscheidet.

Anstelle des inneren Befestigungsbolzens 24 der Figur 2 zeigt die Figur 7 einen Verbindungsbolzen 72. Dieser Verbindungsbolzen 72 ist deutlich kürzer als der innere Befestigungsbolzen 24 gemäß Figur 2. Dieser Verbindungsbolzen 72 reicht im Wesentlichen nur durch den unteren Turmflansch 30 und den oberen, inneren Ringflansch 8. Diese beiden Flansche sind somit durch diese Verbindungsbolzen 72 miteinander fest verbunden bzw. gegeneinander verspannt. Dazu weist der Verbindungsbolzen 72 zwei Schraubenmuttern bzw. Verspannmuttern 36 auf. Eine Zugkraft von der unteren Turmsektion 32 kann in dem gezeigten Bereich über den unteren Turmflansch 30, den Verbindungsbolzen 72, den oberen, inneren Ringflansch, den ringförmigen Mantelabschnitt 20 der Turmfußsektion 1 zum äußeren, unteren Ringflansch 6 geleitet werden und von dort weiter mittels des äußeren Bolzens 26 in das Fundament 18 eingeleitet werden.

Figur 7 zeigt in der Schnittansicht einen Verbindungsbolzen 72. Solche Verbindungsbolzen 72 wechseln sich gemäß der gezeigten Turmfußanordnung 70 mit inneren Bolzen 24 ab. Daher zeigt die Schnittansicht der Figur 2 auch eine Turmfußanordnung 70, auf die sich die Figur 7 bezieht, nämlich für all die Schnitte, die im Bereich eines inneren Bolzens 24 durchgeführt werden.

An den Stellen, an denen ein Verbindungsbolzen 72 gemäß der Turmfußanordnung 70 verwendet wird, kann eine Bohrung sowohl in dem unteren, inneren Stützflansch 10, als dem Segmentanker 28 unbenutzt bleiben und ggf. verfüllt werden, oder der untere, innere Stützflansch 10 und/oder der Segmentanker 28 können entsprechend ohne Bohrung vorgesehen sein.

## Patentansprüche

1. Turmfußsektion (1), zum Anordnen und Befestigen auf einem Fundament (18) und zum Errichten eines Turms einer Windenergieanlage (100) darauf, umfassend
einen äußeren, unteren Ringflansch (6) zum Aufsetzen auf dem Fundament (18) und Befestigen an dem Fundament(18),
einen inneren, oberen Ringflansch (8) zum Aufsetzen und Befestigen eines Turmsegmentes (32) mit korrespondierendem unterem Turmflansch (30) darauf,
einen inneren, unteren Stützflansch (10) zum Aufsetzen auf dem Fundament (18) und
innere Stützelemente (22), insbesondere Stützstreben (22), zum Abstützen des oberen Ringflansches (8) gegen den unteren Stützflansch (10).

2. Turmfußsektion (1) nach Anspruch 1, **gekennzeichnet durch** einen ringförmigen Mantelabschnitt (20), der den unteren Ringflansch (6) und den unteren Stützflansch (10) mit dem oberen Ringflansch (8) verbindet, wobei insbesondere der Mantelabschnitt (20) einen äußeren Bereich und einen inneren Bereich definiert und der untere Ringflansch (6) im äußeren Bereich angeordnet ist und/oder der obere Ringflansch (8), der untere Stützflansch (10) und die Stützelemente (22) im inneren Bereich angeordnet sind.

3. Turmfußsektion (1) nach Anspruch 2, **dadurch gekennzeichnet, dass** die Höhe des Mantelabschnitts (20) 0,2m bis 2m, vorzugsweise 0,5m bis 1,5m, insbesondere etwa 0,75m beträgt.

4. Turmfußsektion (1) nach einem der vorstehenden Ansprüche, **dadurch gekennzeichnet, dass** die Stützelemente (22) als vertikale Stützrippen (22) ausgestaltet sind, wobei insbesondere der obere Ringflansch (8) und der untere Stützflansch (10) mehrere Bohrungen zum Durchführen von Befestigungsschrauben (24) oder Befestigungsbolzen (24) aufweisen und jede Stützrippe (22) jeweils am oberen Ringflansch (8) zwischen zwei der Bohrungen und am untern Stützflansch (10) zwischen zwei der Bohrungen befestigt ist.

5. Turmfußanordnung (2) umfassend
eine Turmfußsektion(1), insbesondere nach einem der vorstehenden Ansprüche,
einen Fundamentkorb (4), mit inneren und äußeren Befestigungsbolzen (24, 26) zum Verankern mit jeweils einer Seite in einem Fundament (18) zum Befestigen mit jeweils einer anderen Seite an der Turmfußsektion (1), wobei die inneren Befestigungsbolzen (24) etwa um die Höhe der Turmfußsektion (1) länger sind als die äußeren Befestigungsbolzen (26).

6. Turmfußanordnung (2) nach Anspruch 5, wobei
die äußeren Befestigungsbolzen (26) zum Befestigen mit der Turmsektion (1) durch Bohrungen des äußeren, unteren Ringflansches (6) geführt werden und
die inneren Befestigungsbolzen (24) durch Bohrungen des inneren, unteren Stützflansches (10) und durch Bohrungen des oberen, inneren Ringflansches (8) geführt werden, um zur Befestigung eines mit einem unteren Turmflansch (30) auf den inneren, oberen Ringflansch (8) aufzusetzendes Turmsegment (32) vorbereitet zu sein, um dabei durch Bohrungen des unteren Turmflansches (30) geführt zu werden.

7. Turmfußanordnung (2) nach Anspruch 5 oder 6, weiter umfassend
mehrere Verbindungsbolzen zum Verbinden der Turmfußsektion mit einem unteren, auf die Turmfußsektion aufgesetzten unteren Turmsegment, wobei die Verbindungsbolzen durch den inneren, oberen Ringflansch (8) und den korrespondierenden unteren Turmflansch (30) des aufgesetzten Turmsegmentes (32) reichen, und insbesondere nicht in das Fundament reichen.

8. Turmfußanordnung (2) nach Anspruch 7, **dadurch gekennzeichnet, dass** die Verbindungsbolzen zum Verspannen jeweils mit zwei Spannmitteln, insbesondere Spannmuttern, versehen sind, um den inneren, oberen Ringflansch (8) und den korrespondierenden unteren Turmflansch (30) des aufgesetzten Turmsegmentes (32) gegeneinander zu verspannen.

9. Turmfußanordnung nach Anspruch 7 oder 8, wobei die inneren Befestigungsbolzen (24) und die Verbindungsbolzen jeweils durch den inneren, oberen Ringflansch (8) und den unteren Turmflansch (30) des aufgesetzten Turmsegmentes (32) reichen und sich dabei insbesondere abwechseln.

10. Turm einer Windenergieanlage (100), umfassend
ein Fundament (18) mit einem Fundamentkorb (4) mit äußeren und inneren Befestigungsbolzen (24, 26) und mit einer Turmfußsektion (1) gemäß einem der Ansprüche 1 bis 4, und
ein unteres Turmsegment (32), insbesondere ein Stahlturmsegment (32), mit einem unteren Turmflansch (30), wobei
das untere Turmsegment (32) mit seinem Turmflansch (30) auf der Turmfußsektion (1) angeordnet ist und einige der Befestigungsbolzen (24), insbesondere die inneren Befestigungsbolzen (24) vom Fundament (18) durch den inneren, unteren Stützflansch (10) und durch den inneren, oberen Ringflansch (8) der Turmfußsektion (1), und durch den unteren Turmflansch geführt sind, um dadurch den unteren Turmflansch auf der Turmfußsektion zu befestigen, insbesondere durch Aufschrauben und Festziehen von Befestigungsmuttern (36) auf die durch den unteren Turmflansch (30) nach oben hindurch ragenden Befestigungsbolzen (24).

11. Turm nach Anspruch 10, umfassend eine Turmfußanordnung nach einem der Ansprüche 5 bis 9.

12. Verfahren zum Errichten eines Turms einer Windenergieanlage (100), insbesondere eines Stahlturms, umfassend die Schritte
Positionieren eines mit einer Turmfußsektion (1) verbundenen Fundamentkorbes (4) in einer für das Gießen eines Fundamentes (18) vorbereiteten Fundamentgrube,
Gießen von Beton in die Fundgrube zum teilweisen Einbetonieren des Fundamentkorbes (4),
Aushärten lassen des gegossenen Betons (18) und
Aufsetzen und Befestigen eines unteren Turmsegmentes (32).

13. Verfahren nach Anspruch 8, **dadurch gekennzeichnet, dass**
eine Turmsektion (1) gemäß einem der Ansprüche 1 bis 4 und/oder eine Turmfußanordnung nach einem der Ansprüche 5 bis 9 verwendet wird und dass
beim Positionieren des Fundamentkorbs (4) dieser über die Befestigungsbolzen (24, 26) mit der Turmfußsektion (1) verbunden ist, wobei die inneren Befestigungsbolzen (24) durch Bohrungen des oberen, inneren Ringflansches (8) geführt und dort mit Befestigungsmitteln (36) befestigt werden, insbesondere mit entsprechenden Muttern (36),
beim Gießen des Betons die Turmfußsektion (1) von einem Kran oder einem in der Fundamentgrube aufgestellten Tragerahmen gehalten wird, wodurch außerdem der an der Turmsektion (1) befestigte Fundamentkorb (4) gehalten wird,
nach dem Aushärten die Turmfußsektion nivelliert wird und/oder
das Aufsetzen und Befestigen eines unteren Turmsegmentes (32) so erfolgt, dass von den inneren Befestigungsbolzen (24) die Befestigungsmittel (36) entfernt werden, das untere Turmsegment (32) mit einem unteren Turmflansch (30) auf den inneren, oberen Ringflansch (8) aufgesetzt wird und dabei die inneren Befestigungsbolzen (24) durch Bohrungen des unteren Turmflansches (30) geführt werden, und die Befestigungsmittel (36), insbesondere Befestigungsmuttern (36), auf die durch den Turmflansch (30) ragenden inneren Befestigungsbolzen (24) aufgeschraubt werden, um den Turmflansch (30) fest auf den oberen, inneren Turmflansch (30) der Turmsektion (32) zu ziehen.

## Claims

1. Tower base section (1) for arranging on and securing to a foundation (18) and for erecting a tower of a wind turbine (100) thereon, comprising
an outer, lower annular flange (6) for placing on the foundation (18) and securing to the foundation (18),
an inner, upper annular flange (8) for placing and securing a tower segment (32) having a corresponding lower tower flange (30) thereon,
an inner, lower support flange (10) for placing on the foundation (18), and
inner support elements (22), in particular support struts (22), for supporting the upper annular flange (8) against the lower support flange (10).

2. Tower base section (1) according to claim 1, **characterised by** an annular covering portion (20) which connects the lower annular flange (6) and the lower support flange (10) to the upper annular flange (8), wherein in particular the covering portion (20) defines an outer region and an inner region and the lower annular flange (6) is arranged in the outer region and/or the upper annular flange (8), the lower support flange (10) and the support elements (22) are arranged in the inner region.

3. Tower base section (1) according to claim 2, **characterised in that** the height of the covering portion (20) is from 0.2 to 2 m, preferably from 0.5 m to 1.5 m, in particular approximately 0.75 m.

4. Tower base section (1) according to any one of the preceding claims, **characterised in that** the support elements (22) are constructed as vertical support ribs (22), wherein in particular the upper annular flange (8) and the lower support flange (10) have a plurality of holes for the passage of securing screws (24) or securing bolts (24) and each support rib (22) is secured to the upper annular flange (8) between two of the holes and to the lower support flange (10) between two of the holes, respectively.

5. Tower base arrangement (2), comprising:
a tower base section (1), in particular according to any one of the preceding claims,
a foundation basket (4) having inner and outer securing bolts (24, 26) for anchoring with one side in a foundation (18) for securing with another side on the tower base section (1) in each case, wherein the inner securing bolts (24) are longer approximately by the height of the tower base section (1) than the outer securing bolts (26).

6. Tower base arrangement (2) according to claim 5, wherein
the outer securing bolts (26) for securing with the tower section (1) are guided through holes of the outer, lower annular flange (6), and
the inner securing bolts (24) are guided through holes of the inner, lower support flange (1) and through holes of the upper, inner annular flange (8) in order to be prepared for securing a tower segment (32) which is intended to be placed with a lower tower flange (30) on the inner, upper annular flange (8) in order to be guided through holes of the lower tower flange (30).

7. Tower base arrangement (2) according to claim 5 or claim 6, further comprising:
a plurality of connection bolts for connecting the tower base section to a lower tower segment which is placed on the tower base section, wherein the connection bolts extend through the inner, upper annular flange (8) and the corresponding lower tower flange (30) of the positioned tower segment (32) and in particular do not extend into the foundation.

8. Tower base arrangement (2) according to claim 7, **characterised in that** the connection bolts for clamping are each provided with two clamping means, in particular clamping nuts, in order to clamp the inner, upper annular flange (8) and the corresponding lower tower flange (30) of the positioned tower segment (32) with respect to each other.

9. Tower base arrangement according to claim 7 or claim 8, wherein the inner securing bolts (24) and the connection bolts each extend through the inner, upper annular flange (8) and the lower tower flange (30) of the positioned tower segment (32) and in particular alternate with each other.

10. Tower of a wind turbine (100), comprising:
a foundation (18) having a foundation basket (4) with outer and inner securing bolts (24, 26) and having a tower base section (1) according to any one of claims 1 to 4, and
a lower tower segment (32), in particular a steel tower segment (32), having a lower tower flange (30), wherein the lower tower segment (32) is arranged with the tower flange (30) thereof on the tower base section (1) and some of the securing bolts (24), in particular the inner securing bolts (24), are guided from the foundation (18) through the inner, lower support flange (10) and through the inner, upper annular flange (8) of the tower base section (1) and through the lower tower flange in order to thereby secure the lower tower flange on the tower base section, in particular by means of screwing and tightening securing nuts (36) on the securing bolts (24) which protrude upwards through the lower tower flange (30).

11. Tower according to claim 10, comprising a tower base arrangement according to any one of claims 5 to 9.

12. Method for erecting a tower of a wind turbine (100), in particular a steel tower, comprising the steps of
positioning a foundation basket (4) which is connected to a tower base section (1) in a foundation pit which is provided for the casting of a foundation (18),
casting concrete into the foundation pit for partially concretingin the foundation basket (4),
allowing the cast concrete (18) to harden, and
placing and securing a lower tower segment (32).

13. Method according to claim 8,
**characterised in that**
a tower section (1) according to any one of claims 1 to 4 and/or a tower base arrangement according to any one of claims 5 to 9 is used, and **in that**,
when the foundation basket (4) is positioned, it is connected via the securing bolts (24, 26) to the tower base section (1), wherein the inner securing bolts (24) are guided through holes of the upper, inner annular flange (8) and secured at that location with securing means (36), in particular with corresponding nuts (36), when the concrete is cast, the tower base section (1) is retained by means of a crane or a carrier frame which is erected in the foundation pit, whereby the foundation basket (4) which is secured to the tower section (1) is further retained,
after hardening, the tower base section is levelled and/or
the positioning and securing of a lower tower segment (32) is carried out in such a manner that the securing means (36) are removed from the inner securing bolts (24), the lower tower segment (32) is placed with a lower tower flange (30) on the inner, upper annular flange (8) and in this instance the inner securing bolts (24) are guided through holes of the lower tower flange (30), and the securing means (36), in particular securing nuts (36), are screwed to the inner securing bolts (24) which protrude through the tower flange (30) in order to pull the tower flange (30) securely onto the upper, inner tower flange (30) of the tower section (32).

## Revendications

1. Section de pied de tour (1) pour l'agencement et la fixation sur une semelle (18) et pour l'édification d'une tour d'une éolienne (100) dessus, comprenant
une bride annulaire (6) inférieure extérieure pour le placement sur la semelle (18) et la fixation sur la semelle (18),
une bride (8) annulaire supérieure intérieure pour le placement et la fixation d'un segment de tour (32) avec une bride de tour (30) inférieure correspondante dessus,
une bride d'appui (10) inférieure intérieure pour le placement sur la semelle (18) et
des éléments d'appui (22) intérieurs, en particulier des entretoises d'appui (22) pour l'appui de la bride annulaire (8) supérieure contre la bride d'appui (10) inférieure.

2. Section de pied de tour (1) selon la revendication 1, **caractérisée par** une section d'enveloppe annulaire (20) qui relie la bride annulaire (6) inférieure et la bride d'appui (10) inférieure à la bride annulaire (8) supérieure, en particulier la section d'enveloppe (20) définissant une zone extérieure et une zone intérieure et la bride annulaire (6) inférieure étant disposée dans la zone extérieure et/ou la bride annulaire (8) supérieure, la bride d'appui (10) inférieure et les éléments d'appui (22) étant disposés dans la zone intérieure.

3. Section de pied de tour (1) selon la revendication 2, **caractérisée en ce que** la hauteur de la section d'enveloppe (20) est comprise entre 0,2 et 2 m, de préférence 0,5 et 1,5 m, s'élève en particulier environ à 0,75 m.

4. Section de pied de tour (1) selon l'une quelconque des revendications précédentes, **caractérisée en ce que** les éléments d'appui (22) sont configurés en tant que nervures d'appui (22) verticales, en particulier la bride annulaire (8) supérieure et la bride d'appui (10) inférieure présentant plusieurs perçages de passage de vis de fixation (24) ou boulons de fixation (24) et chaque nervure d'appui (22) étant respectivement fixée sur la bride annulaire (8) supérieure entre deux des perçages et sur la bride d'appui (10) inférieure entre deux des perçages.

5. Agencement de pied de tour (2) comprenant
une section de pied de tour (1), en particulier selon l'une quelconque des revendications précédentes,
un panier de semelle (4) avec des boulons de fixation (24, 26) intérieurs et extérieurs pour l'ancrage avec respectivement un côté dans une semelle (18) pour la fixation avec respectivement un autre côté sur la section de pied de tour (1), les boulons de fixation (24) intérieurs étant plus longs d'à peu près la hauteur de la section de pied de tour (1) que les boulons de fixation (26) extérieurs.

6. Agencement de pied de tour (2) selon la revendication 5,
les boulons de fixation (26) extérieurs étant guidés pour la fixation avec la section de tour (1) par des perçages de la bride annulaire (6) inférieure extérieure et
les boulons de fixation (24) intérieurs étant guidés par des perçages de la bride d'appui (10) inférieure intérieure et par des perçages de la bride annulaire (8) supérieure intérieure afin d'être préparés pour la fixation d'un segment de tour (32) à placer avec une bride de tour (30) inférieure sur la bride annulaire (8) supérieure intérieure afin d'être guidés par des perçages de la bride de tour (30) inférieure.

7. Agencement de pied de tour (2) selon la revendication 5 ou 6, comprenant en outre
plusieurs boulons de liaison pour la liaison de la section de pied de tour avec un segment de tour inférieur placé sur la section de pied de tour, les boulons de liaison passant par la bride annulaire (8) supérieure intérieure et la bride de tour (30) inférieure correspondante du segment de tour (32) placé et ne passant pas en particulier dans la semelle.

8. Agencement de pied de tour (2) selon la revendication 7, **caractérisé en ce que** les boulons de liaison sont pourvus pour le serrage respectivement de deux moyens de serrage, en particulier d'écrous de serrage afin de serrer la bride annulaire (8) supérieure intérieure et la bride de tour (30) inférieure correspondante, du segment de tour (32) placé, l'une contre l'autre.

9. Agencement de pied de tour selon la revendication 7 ou 8, les boulons de fixation (24) intérieurs et les boulons de liaison passant respectivement par la bride annulaire (8) supérieure intérieure et la bride de tour (30) inférieure du segment de tour (32) placé et étant disposés en alternance en particulier.

10. Tour d'une éolienne (100), comprenant
une semelle (18) présentant un panier de semelle (4) avec des boulons de fixation (24, 26) extérieurs et intérieurs et avec une section de pied de tour (1) selon l'une quelconque des revendications 1 à 4, et
un segment de tour (32) inférieur, en particulier un segment de tour (32) en acier avec une bride de tour (30) inférieure,
le segment de tour (32) inférieur étant disposé avec sa bride de tour (30) sur la section de pied de tour (1) et quelques-uns des boulons de fixation (24), en particulier les boulons de fixation (24) intérieurs de la semelle (18) étant guidés par la bride d'appui (10) inférieure intérieure et par la bride annulaire (8) supérieure intérieure de la section de pied de tour (1) et par la bride de tour inférieure afin de fixer par là même la bride de tour inférieure sur la section de pied de tour, en particulier par vissage et serrage à fond d'écrous de fixation (36) sur les boulons de fixation (24) dépassant par la bride de tour inférieure (30) vers le haut.

11. Tour selon la revendication 10, comprenant un agencement de pied de tour selon l'une quelconque des revendications 5 à 9.

12. Procédé d'édification d'une tour d'une éolienne (100), en particulier d'une tour en acier, comprenant les étapes suivantes :
le positionnement d'un panier de semelle (4) relié à la section de pied de tour (1) dans une fouille de semelle préparé pour la coulée d'une semelle (18),
le coulage de béton dans la fouille de semelle pour le bétonnage partiel du panier de semelle (4),
le durcissement du béton coulé (18) et
le placement et la fixation d'un segment de tour (32) inférieur.

13. Procédé selon la revendication 8, **caractérisé en ce que**
une section de tour (1) selon l'une quelconque des revendications 1 à 4 et/ou un agencement de pied de tour selon l'une quelconque des revendications 5 à 9 est utilisé et **en ce que**
lors du positionnement du panier de semelle (4), celui-ci est relié par les boulons de fixation (24, 26) à la section de pied de tour (1), les boulons de fixation (24) intérieurs étant guidés par des perçages de la bride annulaire (8) supérieure intérieure et y étant fixés avec des moyens de fixation (36), en particulier avec des écrous (36) correspondants,
lors du coulage du béton, la section de pied de tour (1) est maintenue par une grue ou un cadre porteur placé dans la fouille de semelle, par quoi le panier de semelle (4) fixé sur la section de tour (1) est en outre maintenu,
après le durcissement, la section de pied de tour est nivelée et/ou
le placement et la fixation d'un segment de tour (32) inférieur sont effectués de sorte que les moyens de fixation (36) soient retirés des boulons de fixation (24) intérieurs, le segment de tour (32) inférieur soit placé avec une bride de tour (30) inférieure sur la bride annulaire supérieure (8) intérieure et alors les boulons de fixation (24) intérieurs soient guidés par des perçages de la bride de tour (30) inférieure et les moyens de fixation (36), en particulier des écrous de fixation (36), soient vissés sur les boulons de fixation (24) intérieurs dépassant par la bride de tour (30), afin de serrer la bride de tour (30) à fond sur la bride de tour (30) intérieure supérieure de la section de tour (32).
